# EUROPÄISCHE PATENTSCHRIFT

(11) **EP 3 869 057 B1**
(45) Veröffentlichungstag und Bekanntmachung des Hinweises auf die Patenterteilung: **23.08.2023**
(21) Anmeldenummer: 21153032.4
(22) Anmeldetag: 22.01.2021
(51) Int. Cl.: F16D 23/06

(54) **GANGRADEINHEIT SOWIE VERFAHREN ZUR HERSTELLUNG EINER KUPPLUNGSSCHEIBE FÜR EINE GANGRADEINHEIT**
GEAR WHEEL UNIT AND METHOD OF MANUFACTURING A CLUTCH DISC FOR A GEAR WHEEL UNIT
PIGNON, AINSI QUE PROCÉDÉ DE FABRICATION D'UN DISQUE D'EMBRAYAGE POUR UN PIGNON

(30) Priorität: 20.02.2020 DE 102020104537
(43) Veröffentlichungstag der Anmeldung: 25.08.2021
(73) Patentinhaber: HOERBIGER Antriebstechnik Holding GmbH, 86956 Schongau (DE)
(72) Erfinder: Notz, Robert, 86956 Schongau (DE); Guggenmos, Stefan, 86956 Schongau (DE)
(74) Vertreter: Prinz & Partner mbB

(56) Entgegenhaltungen:
- DE-A1-102012 016 681
- DE-A1-102013 101 695

## Beschreibung

Die Erfindung betrifft eine Gangradeinheit für eine Synchronisierungseinheit eines Schaltgetriebes. Diese weist ein Gangrad und eine am Gangrad befestigte Kupplungsscheibe auf, wobei das Gangrad und die Kupplungsscheibe um eine gemeinsame Mittelachse drehbar sind, wobei die Kupplungsscheibe einen radial inneren Kupplungsscheibenabschnitt und einen radial äußeren Kupplungsscheibenabschnitt aufweist, wobei einer der beiden Kupplungsscheibenabschnitte gegenüber dem anderen Kupplungsscheibenabschnitt in Richtung der Mittelachse umgeformt ist.

Zudem betrifft die Erfindung ein Verfahren zur Herstellung einer Kupplungsscheibe für eine solche Gangradeinheit.

Derartige Gangradeinheiten und Verfahren zur Herstellung von zugehörigen Kupplungsscheiben sind aus dem Stand der Technik bekannt. In diesem Zusammenhang werden die Kupplungsscheiben üblicherweise aus scheibenförmigen Kupplungsscheibenrohlingen hergestellt. Um an den Funktionsflächen der Kupplungsscheibe die notwendigen Toleranzen einhalten zu können, werden diese normalerweise beidseitig geschliffen. Dies gilt insbesondere für diejenigen Funktionsflächen, die als Anlagefläche zur Interaktion mit den übrigen Komponenten einer Synchronisierungseinheit dienen, insbesondere für Funktionsflächen zur Wechselwirkung mit dem Gangrad dienen.

Die DE 10 2013 101 695 A1 offenbart eine gattungsgemäße Kupplungsscheibe für eine Synchronisationseinrichtung eines Schaltgetriebes mit einer Außenverzahnung und einer zentralen Öffnung, wobei ein die Öffnung definierender Umfangsrand eine Verdickung aufweist, verglichen mit einem Abschnitt, der radial einwärts unmittelbar an den Zahnfußbereich der Außenverzahnung angrenzt.

Die DE 10 2012 016 681 A1 zeigt eine Anordnung eines Kupplungskörpers an einem Zahnrad für ein Getriebe eines Kraftwagens, bei welcher der Kupplungskörper und das Zahnrad über jeweilige Verzahnungen drehfest miteinander verbunden sind, wobei wenigstens ein Abstandshalteelement vorgesehen ist, mittels welchem die Verzahnung des Kupplungskörpers von einer dem Kupplungskörper zugewandten Stirnseite des Zahnrads in axialer Richtung beabstandet ist, sowie einen Kupplungskörper für ein Zahnrad eines Kraftwagengetriebes.

Der Erfindung liegt die Aufgabe zugrunde, bekannte Gangradeinheiten zu verbessern. Dabei soll die Gangradeinheit insbesondere einfach und kostengünstig aufgebaut sein.

Die Aufgabe wird durch eine Gangradeinheit der eingangs genannten Art gelöst, wobei der radial innere Kupplungsscheibenabschnitt und der radial äußere Kupplungsscheibenabschnitt entlang der Mittelachse im Wesentlichen die gleiche Dicke aufweisen und wobei der radial innere Kupplungsscheibenabschnitt und der radial äußere Kupplungsscheibenabschnitt umfangsmäßig um die Mittelachse vollständig umlaufen und durch eine umfangsmäßig um die Mittelachse vollständig umlaufende Kröpfung verbunden sind, und wobei am radial inneren Kupplungsscheibenabschnitt an einer gegenüber dem radial äußeren Kupplungsscheibenabschnitt in Axialrichtung hervorspringenden Stirnseite eine erste Anlagefläche vorgesehen ist und die erste Anlagefläche am Gangrad anliegt, insbesondere wobei die erste Anlagefläche durch das Umformen des radial inneren Kupplungsscheibenabschnitts gegenüber dem radial äußeren Kupplungsscheibenabschnitt erzeugt ist. Die zumindest abschnittsweise Umformung bringt mit sich, dass der radial innere Kupplungsscheibenabschnitt und der radial äußere Kupplungsscheibenabschnitt entlang der Mittelachse zueinander versetzt angeordnet sind. Dabei können mittels des Umformvorgangs auf vergleichsweise schnelle und einfache Weise Kupplungsscheiben hergestellt werden, die engen Toleranzen genügen. Insbesondere sind dabei Umformverfahren für die Serien- und Massenfertigung gut geeignet. Darüber hinaus ermöglich es die Herstellung mittels Umformen, die Kupplungsscheibe als funktionsintegriertes Bauteil herzustellen. Es können also im Zuge des Umformens eine Vielzahl an Funktionsmerkmalen, insbesondere Funktionsflächen, an der Kupplungsscheibe realisiert werden. Es ergibt sich so eine Gangradeinheit, die einfach und kostengünstig aufgebaut ist und ebenfalls einfach und kostengünstig hergestellt werden kann. Hinzu kommt, dass durch die umgeformten Abschnitte der Kupplungsscheibe insbesondere im Vergleich zu einer massiv ausgeführten Kupplungsscheibe Material gespart werden kann. Dadurch ist eine umgeformte Kupplungsscheibe leicht im Gewicht. Folglich ergibt sich eine Gangradeinheit mit ebenfalls vergleichsweise geringem Gewicht. Die Kupplungsscheibe kann aufgrund der gleichen Dicke der beiden Kupplungsscheibenabschnitte aus einem vergleichsweise einfachen Kupplungsscheibenrohling hergestellt werden. Insbesondere handelt es sich dabei um ein scheibenförmiges Blechteil. Die Kupplungsscheibe kann somit unter Nutzung standardmäßiger Verfahren und Anlagen produziert werden. Sowohl der radial innere Kupplungsscheibenabschnitt als auch der radial äußere Kupplungsscheibenabschnitt sind Ringabschnitte. Beide Kupplungsscheibenabschnitte erstrecken sich im Wesentlichen in einer jeweils zugeordneten Transversalebene, die sich jeweils senkrecht zur Mittelachse erstrecken. Dabei umfasst die Kröpfung zwei ringförmige Biegebereiche, die die beiden Kupplungsscheibenabschnitte miteinander verbinden. Eine solche Kröpfung lässt sich mit bekannten Anlagen einfach und kostengünstig herstellen.

In diesem Zusammenhang dient die Benennung der Anlagefläche als erste lediglich der eindeutigen Bezeichnung. Eine Anzahl an Anlageflächen ist damit nicht impliziert. Insbesondere ist dabei die erste Anlagefläche eine Ringfläche. Alternativ setzt sich die erste Anlagefläche aus einer Mehrzahl an Umfangssegmenten zusammen. Die erste Anlagefläche kann somit vergleichsweise einfach, aber mit hoher Präzision hergestellt werden. Es ergibt sich eine Gangradeinheit mit einfachem Aufbau und zuverlässiger Funktion

Die umgeformte Kupplungsscheibe der erfindungsgemäßen Gangradeinheit kann dabei so gestaltet sein, dass ihre Funktionsmerkmale in ihrer Position und Ausrichtung den Funktionsmerkmalen bekannter Kupplungsscheiben entsprechen. Das gilt insbesondere für eine Dicke der Kupplungsscheibe. Somit kann die Kupplungsscheibe der erfindungsgemäßen Gangradeinheit als Ersatzteil für bereits bestehende Kupplungsscheiben verwendet werden. Insbesondere können so bekannte, massive Kupplungsscheiben durch umgeformte Kupplungsscheiben ersetzt werden.

Am radial äußeren Umfangsrand hat die Kupplungsscheibe vorzugsweise eine Umfangsverzahnung, die mit der Schiebenmuffe im synchronisierten Zustand im Eingriff ist. Diese Umfangsverzahnung ist definitionsgemäß nicht Teil des radial äußeren, umgeformten Kupplungsscheibenabschnitts, auch wenn sie beim axialen Umformen mit axial bewegt wird.

Alternativ oder zusätzlich kann am radial äußeren Kupplungsscheibenabschnitt an einer gegenüber dem radial inneren Kupplungsscheibenabschnitt in Axialrichtung hervorspringenden Stirnseite eine zweite Anlagefläche zum Anlegen einer Reibkomponente oder einer Synchronnabe der Synchronisierungseinheit vorgesehen sein. Insbesondere ist die zweite Anlagefläche durch das Umformen des radial inneren Kupplungsscheibenabschnitts gegenüber dem radial äußeren Kupplungsscheibenabschnitt erzeugt. In diesem Zusammenhang dient die Benennung der Anlagefläche als zweite lediglich der eindeutigen Bezeichnung. Eine Anzahl an Anlageflächen ist damit nicht impliziert. Eine Reibkomponente ist vorliegend zum Beispiel ein Reibring oder ein Reibkonus. Die zweite Anlagefläche kann eine Ringfläche sein. Die zweite Anlagefläche kann somit vergleichsweise einfach, aber mit hoher Präzision hergestellt werden. Es ergibt sich eine einfach aufgebaute und zuverlässig arbeitende Gangradeinheit.

Für den Fall, dass eine Kupplungsscheibe sowohl mit einer ersten Anlagefläche als auch mit einer zweiten Anlagefläche ausgestattet ist, liegen die erste Anlagefläche und die zweite Anlagefläche entlang der Mittelachse auf entgegengesetzten Seiten.

In einer Variante ist am radial äußeren Kupplungsscheibenabschnitt an einer gegenüber dem radial inneren Kupplungsscheibenabschnitt in Axialrichtung hervorspringenden Stirnseite eine dritte Anlagefläche zum Anlegen einer Schiebemuffe an die Kupplungsscheibe vorgesehen. Insbesondere ist die dritte Anlagefläche durch das Umformen des radial inneren Kupplungsscheibenabschnitts gegenüber dem radial äußeren Kupplungsscheibenabschnitt erzeugt. In diesem Zusammenhang dient die Benennung der Anlagefläche als dritte wieder lediglich der eindeutigen Bezeichnung. Eine Anzahl an Anlageflächen ist weiterhin nicht impliziert. Die Schiebemuffe liegt insbesondere dann an der dritten Anlagefläche an, wenn ein Gang, an dem ein mit der Kupplungsscheibe verbundenes Gangrad mitwirkt, eingelegt ist. Auch die dritte Anlagefläche kann eine Ringfläche sein. Ferner ist es möglich, dass die dritte Anlagefläche aus einer Mehrzahl an Umfangssegmenten zusammengesetzt ist. Die dritte Anlagefläche kann somit präzise und einfach hergestellt werden. Es ergibt sich eine Gangradeinheit mit einfachem Aufbau.

Es versteht sich, dass beim Umformen Abschnitte der Kupplungsscheibe feststehen können, während andere Abschnitte der Kupplungsscheibe gegenüber diesen feststehenden Abschnitten bewegt, d.h. umgeformt werden.

Die Anlageflächen sind insbesondere plan und liegen in einer Transversalebene zur Mittelachse, d.h. einer Ebene, die senkrecht zur Mittelachse liegt.

Darüber hinaus wird die Aufgabe durch ein Verfahren zur Herstellung einer Kupplungsscheibe für eine erfindungsgemäße Gangradeinheit gelöst, wobei die Kupplungsscheibe um eine Mittelachse drehbar ist. Das Verfahren umfasst die folgenden Schritte:
a) Vorsehen eines im Wesentlichen ebenen Kupplungsscheibenrohlings aus Blech mit einer im Wesentlichen konstanten Dicke, und
b) Umformen zumindest eines Umfangssegments eines radial inneren Abschnitts des Kupplungsscheibenrohlings in Richtung der Mittelachse und/oder Umformen zumindest eines Umfangssegments eines radial äußeren Abschnitts des Kupplungsscheibenrohlings in Richtung der Mittelachse, sodass ein radial innerer Kupplungsscheibenabschnitt und ein radial äußerer Kupplungsscheibenabschnitt relativ zueinander entlang der Mittelachse versetzt sind wobei der radial innere Abschnitt des Kupplungsscheibenrohlings und der radial äußere Abschnitt des Kupplungsscheibenrohlings umfangsmäßig geschlossen sind und der radial innere Abschnitt des Kupplungsscheibenrohlings relativ zum radial äußeren Abschnitt des Kupplungsscheibenrohlings und/oder der radial äußere Abschnitt des Kupplungsscheibenrohlings relativ zum radial inneren Abschnitt des Kupplungsscheibenrohlings durch eine umfangsmäßig um die Mittelachse (16) vollständig umlaufende Kröpfung (24) abgekröpft wird und wobei beim Umformen in Richtung der Mittelachse am radial inneren Kupplungsscheibenabschnitt eine erste Anlagefläche zur Anlage der Kupplungsscheibe an einem Gangrad geformt wird, insbesondere wobei die erste Anlagefläche an einer gegenüber dem radial äußeren Kupplungsscheibenabschnitt in Axialrichtung hervorspringenden Stirnseite geformt wird.

In diesem Zusammenhang ist der Kupplungsscheibenrohling vorzugsweise kreisscheibenförmig. Die Kupplungsscheibe entsteht somit aus dem Kupplungsscheibenrohling indem dieser umgeformt wird. Das ist einfach und kostengünstig. Darüber hinaus können mittels umformender Herstellungsverfahren enge Toleranzen eingehalten werden.

Optional wird die Kupplungsscheibe nachfolgend an einem Gangrad befestigt, sodass eine Gangradeinheit entsteht. Mit anderen Worten umfasst ein Verfahren zur Herstellung einer Gangradeinheit die bereits genannten Schritte zur Herstellung einer Kupplungsscheibe sowie das Befestigen der Kupplungsscheibe am Gangrad.

Gemäß einer Ausführungsform sind der radial innere Abschnitt des Kupplungsscheibenrohlings und der radial äußere Abschnitt des Kupplungsscheibenrohlings umfangsmäßig geschlossen und der radial innere Abschnitt des Kupplungsscheibenrohlings wird relativ zum radial äußeren Abschnitt des Kupplungsscheibenrohlings und/oder der radial äußere Abschnitt des Kupplungsscheibenrohlings relativ zum radial inneren Abschnitt des Kupplungsscheibenrohlings abgekröpft. Dabei ist Kröpfen ein standardmäßiges Verfahren der Blechverarbeitung, das vergleichsweise schnell und mit hoher Präzision erfolgen kann. Die Kupplungsscheibe ist somit einfach herstellbar.

Beim Umformen in Richtung der Mittelachse kann am radial inneren Kupplungsscheibenabschnitt eine erste Anlagefläche zur Anlage der Kupplungsscheibe an einem Gangrad geformt werden. Insbesondere wird die erste Anlagefläche an einer gegenüber dem radial äußeren Kupplungsscheibenabschnitt in Axialrichtung hervorspringenden Stirnseite geformt. Die erste Anlagefläche kann somit einfach und kostengünstig hergestellt werden. Zudem kann sie mit hoher Präzision gefertigt werden.

Alternativ oder zusätzlich kann am radial äußeren Kupplungsscheibenabschnitt eine zweite Anlagefläche zum Anlegen einer Reibkomponente der Synchronisierungseinheit geformt werden. Insbesondere wird die zweite Anlagefläche an einer gegenüber dem radial inneren Kupplungsscheibenabschnitt in Axialrichtung hervorspringenden Stirnseite geformt. Auch die zweite Anlagefläche kann somit einfach und kostengünstig hergestellt werden. Ebenfalls können enge Toleranzen eingehalten werden.

Zudem ist es möglich, am radial äußeren Kupplungsscheibenabschnitt eine dritte Anlagefläche zum Anlegen einer Schiebemuffe an die Kupplungsscheibe zu formen. Insbesondere wird die dritte Anlagefläche an einer gegenüber dem radial inneren Kupplungsscheibenabschnitt in Axialrichtung hervorspringenden Stirnseite geformt. Die dritte Anlagefläche lässt sich so mit hoher Präzision fertigen.

Bevorzugt stellt das axiale Umformen einen Feinbearbeitungsschritt dar. Insbesondere ist das axiale Umformen der letzte mechanische Bearbeitungsschritt zur Herstellung der Kupplungsscheibe.

Besonders bevorzugt folgt dabei auf das axiale Umformen kein spanender Bearbeitungsschritt mehr, insbesondere kein Schleifen. Es lassen sich auf diese Weise Kupplungsscheiben besonders effizient, d.h. schnell und kostengünstig, herstellen.

Ferner ist es von Vorteil, wenn die Umfangsverzahnung vor dem axialen Umformen des radial inneren und/oder äußeren Umfangsabschnitts hergestellt wird, je nachdem, ob nur der radial innere oder nur der radial äußere oder beide Umfangsabschnitte umgeformt werden. Das bedeutet, die Umfangsverzahnung wird nach dem axialen Umformen nicht mehr umgeformt oder erzeugt.

Die Erfindung wird nachstehend anhand verschiedener Ausführungsbeispiele erläutert, die in den beigefügten Zeichnungen gezeigt sind. Es zeigen:
- Figur 1 eine erfindungsgemäße Gangradeinheit gemäß einer ersten Ausführungsform in einer Halbschnittdarstellung,
- Figur 2 schematisch eine Kupplungsscheibe der Gangradeinheit aus Figur 1 in einer Ansicht entlang der Richtung II in Figur 1,
- Figur 3 eine Gangradeinheit gemäß einer zweiten Ausführungsform in einer Halbschnittdarstellung, die nicht unter den Schutzbereich fällt,
- Figur 4 schematisch eine Kupplungsscheibe der Gangradeinheit aus Figur 3 in einer Ansicht entlang der Richtung IV in Figur 3,
- Figur 5 schematisch die Herstellung einer Kupplungsscheibe, die für eine Gangradeinheit gemäß der ersten Ausführungsform vorgesehen ist, und
- Figur 6 schematisch die Herstellung einer Kupplungsscheibe, die für eine Gangradeinheit gemäß der zweiten Ausführungsform vorgesehen ist.

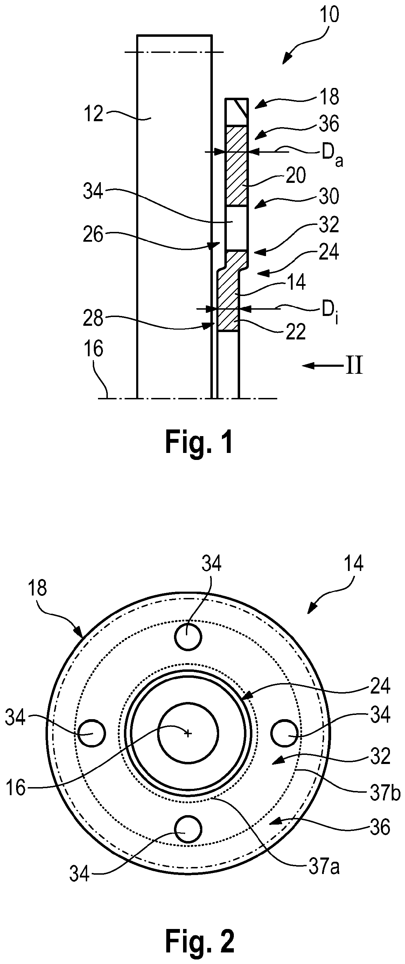

Figur 1 zeigt eine Gangradeinheit 10 gemäß einer ersten Ausführungsform, die ein lediglich schematisch dargestelltes Gangrad 12 und eine am Gangrad 12 befestigte Kupplungsscheibe 14 aufweist.

Dabei sind das Gangrad 12 und die Kupplungsscheibe 14 um eine gemeinsame Mittelachse 16 drehbar und drehfest miteinander verbunden.

Nachdem die Gangradeinheit 10 zum Zusammenwirken mit einer Synchronisierungseinheit eines Schaltgetriebes vorgesehen ist, ist die Kupplungsscheibe 14 an ihrem Außenumfang mit einer Verzahnung 18, auch Umfangsverzahnung genannt, ausgestattet, die mit einer nicht näher dargestellten Schiebemuffe der Synchronisierungseinheit zusammenwirken kann.

Die Verzahnung 18 ist an einem umfangsmäßig vollständig umlaufenden, radial äußeren Kupplungsscheibenabschnitt 20 vorgesehen.

In Richtung der Mittelachse 16 schließt sich an den radial äußeren Kupplungsscheibenabschnitt 20 ein radial innerer Kupplungsscheibenabschnitt 22 an. Dieser ist ebenfalls umfangsmäßig vollständig umlaufend.

Die beiden Kupplungsscheibenabschnitte 20, 22 können auch als umfangsmäßig geschlossen bezeichnet werden.

Sie sind über eine Kröpfung 24 miteinander verbunden.

Es ist dabei einer der beiden Kupplungsscheibenabschnitte 20, 22 gegenüber dem anderen Kupplungsscheibenabschnitt 20, 22 in Richtung der Mittelachse 16, also axial, umgeformt.

In der dargestellten Ausführungsform haben der radial äußere Kupplungsscheibenabschnitt 20 und der radial innere Kupplungsscheibenabschnitt 22 im Wesentlichen die gleiche dicke Dₐ, Dᵢ.

Um die Kupplungsscheibe 14 definiert am Gangrad 12 befestigen oder positionieren zu können, ist am radial inneren Kupplungsscheibenabschnitt 22 an einer gegenüber dem radial äußeren Kupplungsscheibenabschnitt 20 entlang der Mittelachse 16 hervorspringende Stirnseite 26 eine erste, plane Anlagefläche 28 vorgesehen.

Im in Figur 1 dargestellten, montierten Zustand der Gangradeinheit 10 liegt die erste Anlagefläche 28 am Gangrad 12 an.

An einer entgegengesetzten Stirnseite 30 der Kupplungsscheibe 14 ist am äußeren Kupplungsscheibenabschnitt 20 eine zweite Anlagefläche 32 vorgesehen, die dazu dient, eine Reibkomponente, zum Beispiel einen Reibring der Synchronisierungseinheit, oder eine Synchronnabe der Synchronisierungseinheit an die Kupplungsscheibe 14 anzulegen.

Dabei springt die Stirnseite 30 gegenüber dem radial inneren Kupplungsscheibenabschnitt 22 in Axialrichtung hervor.

Zur Befestigung der Reibkomponente sind in der dargestellten Ausführungsform darüber hinaus Öffnungen 34 vorgesehen.

Außerdem ist an der Stirnseite 30 am radial äußeren Kupplungsscheibenabschnitt 20 eine dritte Anlagefläche 36 vorgesehen, die dazu dient, Komponenten des Reibsystems der Synchronisierungseinheit, z. B. einen Reibring, an die Kupplungsscheibe 14 anzulegen.

Während sich die erste Anlagefläche 28 im Wesentlichen über den gesamten radial inneren Kupplungsscheibenabschnitt 22 an der Stirnseite 26 erstreckt, sind die zweite Anlagefläche 32 und die dritte Anlagefläche 36 lediglich durch Abschnitte der Stirnseite 30 im Bereich des radial äußeren Kupplungsscheibenabschnitts 20 gebildet.

Diese Abschnitte sind in Figur 2 durch punktierte Linien abgegrenzt, wobei eine punktierte Linie 37a ein radial inneres Ende der zweiten Anlagefläche 32 markiert und eine punktierte Linie 37b einen Übergang von der zweiten Anlagefläche 32 zur dritten Anlagefläche 36.

Selbstverständlich können alternativ die zweite Anlagefläche 32 und die dritte Anlagefläche 36 radial voneinander beabstandet sein und nicht wie in Figur 2 ineinander übergehen.

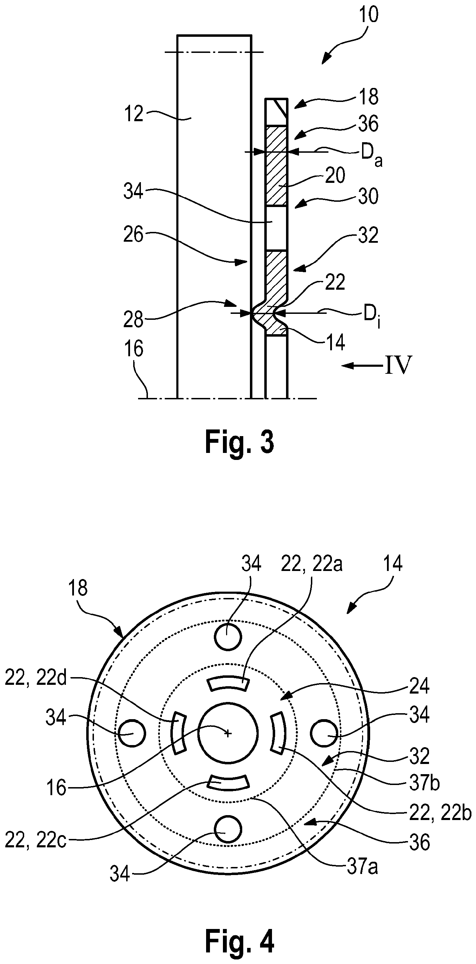

In den Figuren 3 und 4 ist eine zweite Ausführungsform der Gangradeinheit 10 gezeigt. Diese entspricht im Wesentlichen der ersten Ausführungsform, sodass im Folgenden lediglich auf die Unterschiede eingegangen wird. Gleiche und funktionsgleiche Teile sind mit denselben Bezugszeichen versehen.

Die Kupplungsscheibe 14 der Gangradeinheit 10 der zweiten Ausführungsform unterscheidet sich im Wesentlichen hinsichtlich des radial inneren Kupplungsscheibenabschnitts 22 von der Gangradeinheit 10 der ersten Ausführungsform.

Dieser hat nun eine Mehrzahl an umgeformten Umfangssegmenten 22a, 22b, 22c, 22d (siehe Figur 4).

Diese Umfangssegmente 22a, 22b, 22c, 22d sind umfangsmäßig voneinander beabstandet. In einem Radialschnitt ist jedes dieser Umfangssegmente 22a, 22b, 22c, 22d napfförmig (siehe insbesondere Figur 3).

Folglich ist in der zweiten Ausführungsform die erste Anlagefläche 28 aus insgesamt vier Anlageflächensegmenten zusammengesetzt, die jeweils durch einen auf der Stirnseite 26 liegenden planen Stirnseitenabschnitt der Umfangssegmente 22a, 22b, 22c, 22d gebildet sind. Dabei versteht es sich, dass die Anlagefläche 28 auch aus mehr oder weniger als vier Anlageflächensegmenten zusammengesetzt sein kann. In einer alternativen Ausführungsform sind dabei drei Anlageflächensegmente vorgesehen.

Die Kupplungsscheibe 14 liegt somit in der dargestellten Ausführungsform über die vier Umfangssegmente 22a, 22b, 22c, 22d am Gangrad 12 an.

Die zweite Anlagefläche 32 und dritte Anlagefläche 36 sind wie in der ersten Ausführungsform ausgeführt, sodass hierauf verwiesen wird.

Für den Fall, dass die Kupplungsscheibe 14 dazu vorgesehen ist, auch als Ersatzteil für bekannte Gangradeinheiten zu dienen, können die Anlageflächen 28, 32, 36 so positioniert und orientiert sein wie dies bei bekannten Kupplungsscheiben der Fall ist, z. B. bei massiven, nicht umgeformten Kupplungsscheiben.

Im Folgenden wird ein Verfahren zur Herstellung der Kupplungsscheibe 14 für die Gangradeinheit 10 erläutert.

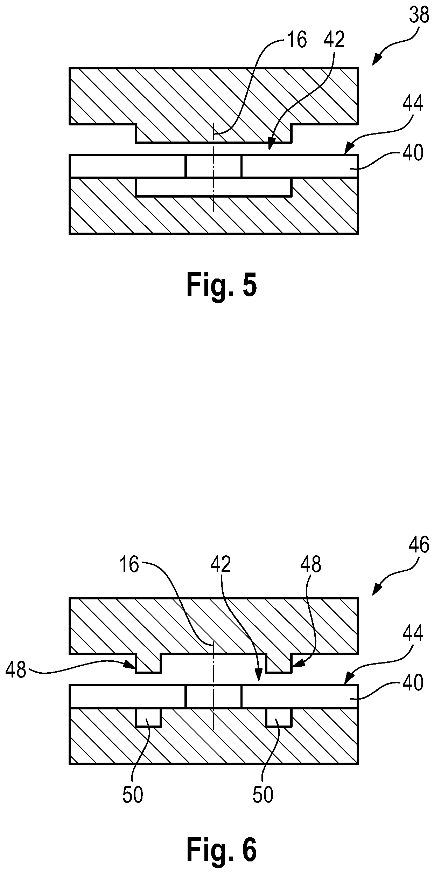

Dabei ist in der Figur 5 schematisch ein Werkzeug 38 dargestellt, mit dem eine Kupplungsscheibe 14 gemäß Figur 2 hergestellt werden kann, also eine Kupplungsscheibe 14 für eine Gangradeinheit 10 gemäß der ersten Ausführungsform. Bei einer solchen Kupplungsscheibe 14 sind der radial äußere Kupplungsscheibenabschnitt 20 und der radiale innere Kupplungsscheibenabschnitt 22 umfangsmäßig geschlossen.

Im Zuge der Herstellung wird zunächst ein im Wesentlichen ebener Kupplungsscheibenrohling 40 vorgesehen. Dieser weist somit einen radial inneren Abschnitt 42 und einen radial äußeren Abschnitt 44 auf, die im Wesentlichen in einer Ebene liegen.

Durch Umformen und/oder durch spanendes Bearbeiten wird die Verzahnung 18 hergestellt.

In der dargestellten Ausführungsform wird dann der radial innere Abschnitt 42 des Kupplungsscheibenrohlings 40 in Richtung der Mittelachse 16 umgeformt, sodass der radial innere Kupplungsscheibenabschnitt 22 und der radial äußere Kupplungsscheibenabschnitt 20 der dadurch entstehenden Kupplungsscheibe 14 relativ zueinander entlang der Mittelachse 16 versetzt sind (siehe auch Figur 1).

Mit anderen Worten wird der radial innere Abschnitt 42 relativ zum radial äußeren Abschnitt 44 abgekröpft.

Durch das Herstellen des radial inneren Kupplungsscheibenabschnitts 22 und des radial äußeren Kupplungsscheibenabschnitts 20 werden zudem die erste Anlagefläche 28, die zweite Anlagefläche 32 und die dritte Anlagefläche 36 erzeugt.

Dabei stellt das Umformen einen Feinbearbeitungsschritt dar, der der letzte mechanische Bearbeitungsschritt zur Herstellung der Kupplungsscheibe 14 ist. Nach dem Umformen muss die Kupplungsscheibe 14 also nicht weiter bearbeitet werden.

In Figur 6 ist schematisch ein Werkzeug 46 dargestellt, mit dem eine Kupplungsscheibe 14 gemäß Figur 4 hergestellt werden kann, also eine Kupplungsscheibe 14 für eine Gangradeinheit 10 gemäß der zweiten Ausführungsform. In dieser Ausführungsform hat der radial innere Kupplungsscheibenabschnitt 22 eine Mehrzahl an umgeformten Umfangssegmenten 22a, 22b, 22c, 22d. Diese sind in einem Radialschnitt jeweils napfförmig.

Auch hier wird das Blech am Außenrand bearbeitet, um die Verzahnung 18 herzustellen. Für das anschließende axiale Umformen wird das Werkzeug nach Figur 6 verwendet.

Dabei umfasst das Werkzeug 46 mehrere Vorsprünge 48 und zugeordnete Vertiefungen 50, die in ihrer Anzahl und ihrer Form den herzustellenden Umfangssegmenten 22a, 22b, 22c, 22d entsprechen.

Dabei stellt auch in dieser Variante das Umformen einen Feinbearbeitungsschritt dar, der der letzte Bearbeitungsschritt zur Herstellung der Kupplungsscheibe 14 ist.

## Patentansprüche

1. Gangradeinheit (10) für eine Synchronisierungseinheit eines Schaltgetriebes, mit einem Gangrad (12) und einer am Gangrad (12) befestigten Kupplungsscheibe (14), wobei das Gangrad (12) und die Kupplungsscheibe (14) um eine gemeinsame Mittelachse (16) drehbar sind, wobei die Kupplungsscheibe (14) einen radial inneren Kupplungsscheibenabschnitt (22) und einen radial äußeren Kupplungsscheibenabschnitt (20) aufweist, wobei einer der beiden Kupplungsscheibenabschnitte (20, 22) gegenüber dem anderen Kupplungsscheibenabschnitt (20, 22) in Richtung der Mittelachse (16) umgeformt ist, **dadurch gekennzeichnet, dass** der radial innere Kupplungsscheibenabschnitt (22) und der radial äußere Kupplungsscheibenabschnitt (22) entlang der Mittelachse (16) im Wesentlichen die gleiche Dicke (Dᵢ, Dₐ) aufweisen, wobei der radial innere Kupplungsscheibenabschnitt (22) und der radial äußere Kupplungsscheibenabschnitt (20) umfangsmäßig um die Mittelachse (16) vollständig umlaufen und durch eine umfangsmäßig um die Mittelachse (16) vollständig umlaufende Kröpfung (24) verbunden sind, und wobei am radial inneren Kupplungsscheibenabschnitt (22) an einer gegenüber dem radial äußeren Kupplungsscheibenabschnitt (20) in Axialrichtung hervorspringenden Stirnseite (26) eine erste Anlagefläche (28) vorgesehen ist und die erste Anlagefläche (28) am Gangrad (12) anliegt.

2. Gangradeinheit nach Anspruch 1, **dadurch gekennzeichnet, dass** die erste Anlagefläche (28) durch das Umformen des radial inneren Kupplungsscheibenabschnitts (22) gegenüber dem radial äußeren Kupplungsscheibenabschnitt (20) erzeugt ist.

3. Gangradeinheit (10) nach Anspruch 1 oder 2, **dadurch gekennzeichnet, dass** am radial äußeren Kupplungsscheibenabschnitt (20) an einer gegenüber dem radial inneren Kupplungsscheibenabschnitt (22) in Axialrichtung hervorspringenden Stirnseite (30) eine zweite Anlagefläche (32) zum Anlegen einer Reibkomponente oder einer Synchronnabe der Synchronisierungseinheit vorgesehen ist, insbesondere wobei die zweite Anlagefläche (32) durch das Umformen des radial inneren Kupplungsscheibenabschnitts (22) gegenüber dem radial äußeren Kupplungsscheibenabschnitt (20) erzeugt ist.

4. Gangradeinheit (10) nach einem der vorhergehenden Ansprüche, **dadurch gekennzeichnet, dass** am radial äußeren Kupplungsscheibenabschnitt (20) an einer gegenüber dem radial inneren Kupplungsscheibenabschnitt (22) in Axialrichtung hervorspringenden Stirnseite (30) eine dritte Anlagefläche (36) zum Anlegen einer Schiebemuffe an die Kupplungsscheibe (14) vorgesehen ist, insbesondere wobei die dritte Anlagefläche (36) durch das Umformen des radial inneren Kupplungsscheibenabschnitts (22) gegenüber dem radial äußeren Kupplungsscheibenabschnitt (20) erzeugt ist.

5. Verfahren zur Herstellung einer Kupplungsscheibe (14) für eine Gangradeinheit (10) nach einem der vorhergehenden Ansprüche, wobei die Kupplungsscheibe (14) um eine Mittelachse (16) drehbar ist, mit den folgenden Schritten:
a) Vorsehen eines im Wesentlichen ebenen Kupplungsscheibenrohlings (40) aus Blech mit einer im Wesentlichen konstanten Dicke, und
b) Umformen eines radial inneren Abschnitts (42) des Kupplungsscheibenrohlings (40) in Richtung der Mittelachse (16) und/oder Umformen eines radial äußeren Abschnitts (44) des Kupplungsscheibenrohlings (40) in Richtung der Mittelachse (16), sodass ein radial innerer Kupplungsscheibenabschnitt (22) und ein radial äußerer Kupplungsscheibenabschnitt (20) relativ zueinander entlang der Mittelachse (16) versetzt sind, wobei der radial innere Abschnitt (42) des Kupplungsscheibenrohlings (40) und der radial äußere Abschnitt (44) des Kupplungsscheibenrohlings (40) umfangsmäßig geschlossen sind und der radial innere Abschnitt (42) des Kupplungsscheibenrohlings (40) relativ zum radial äußeren Abschnitt (44) des Kupplungsscheibenrohlings (40) und/oder der radial äußere Abschnitt (44) des Kupplungsscheibenrohlings (40) relativ zum radial inneren Abschnitt (42) des Kupplungsscheibenrohlings (40) durch eine umfangsmäßig um die Mittelachse (16) vollständig umlaufende Kröpfung (24) abgekröpft wird und wobei beim Umformen in Richtung der Mittelachse (16) am radial inneren Kupplungsscheibenabschnitt (22) eine erste Anlagefläche (28) zur Anlage der Kupplungsscheibe (14) an einem Gangrad (12) geformt wird.

6. Verfahren nach Anspruch 5, **dadurch gekennzeichnet, dass** die erste Anlagefläche (28) an einer gegenüber dem radial äußeren Kupplungsscheibenabschnitt (20) in Axialrichtung hervorspringenden Stirnseite (26) geformt wird.

7. Verfahren nach Anspruch 5 oder 6, **dadurch gekennzeichnet, dass** beim Umformen in Richtung der Mittelachse (16)
am radial äußeren Kupplungsscheibenabschnitt (20) eine zweite Anlagefläche (32) zum Anlegen einer Reibkomponente der Synchronisierungseinheit geformt wird, insbesondere wobei die zweite Anlagefläche (32) an einer gegenüber dem radial inneren Kupplungsscheibenabschnitt (22) in Axialrichtung hervorspringenden Stirnseite (30) geformt wird, und/oder
am radial äußeren Kupplungsscheibenabschnitt (22) eine dritte Anlagefläche (36) zum Anlegen einer Schiebemuffe an die Kupplungsscheibe (14) geformt wird, insbesondere wobei die dritte Anlagefläche (36) an einer gegenüber dem radial inneren Kupplungsscheibenabschnitt (22) in Axialrichtung hervorspringenden Stirnseite (30) geformt wird.

8. Verfahren nach einem der Ansprüche 5 bis 7, **dadurch gekennzeichnet, dass** das axiale Umformen einen Feinbearbeitungsschritt darstellt, insbesondere wobei das axiale Umformen der letzte mechanische Bearbeitungsschritt zur Herstellung der Kupplungsscheibe (14) ist.

## Claims

1. A speed change gear unit (10) for a synchronizing unit of a manual transmission, comprising a speed change gear (12) and a clutch disc (14) fastened to the speed change gear (12), the speed change gear (12) and the clutch disc (14) being rotatable about a common central axis (16), the clutch disc (14) including a radially inner clutch disc portion (22) and a radially outer clutch disc portion (20), with one of the two clutch disc portions (20, 22) being reshaped relative to the other clutch disc portion (20, 22) in the direction of the central axis (16), **characterized in that** the radially inner clutch disc portion (22) and the radially outer clutch disc portion (20) have essentially the same thickness (Dᵢ, Dₐ) along the central axis (16), wherein the radially inner clutch disc portion (22) and the radially outer clutch disc portion (20) fully surround the central axis (16) circumferentially and are connected by an offset (24) that fully surrounds the central axis (16) circumferentially, and wherein a first contact surface (28) is provided on the radially inner clutch disc portion (22) on a face side (26) projecting in the axial direction with respect to the radially outer clutch disc portion (20), and the first contact surface (28) rests against the speed change gear (12).

2. The speed change gear unit according to claim 1, **characterized in that** the first contact surface (28) is produced by the reshaping of the radially inner clutch disc portion (22) relative to the radially outer clutch disc portion (20).

3. The speed change gear unit (10) according to claim 1 or 2, **characterized in that** a second contact surface (32) for applying a friction component or a synchronizer hub of the synchronizing unit is provided on the radially outer clutch disc portion (20) on a face side (30) projecting in the axial direction with respect to the radially inner clutch disc portion (22), in particular wherein the second contact surface (32) is produced by the reshaping of the radially inner clutch disc portion (22) relative to the radially outer clutch disc portion (20).

4. The speed change gear unit (10) according to any of the preceding claims, **characterized in that** a third contact surface (36) for applying a sliding sleeve to the clutch disc (14) is provided on the radially outer clutch disc portion (20) on a face side (30) projecting in the axial direction with respect to the radially inner clutch disc portion (22), in particular wherein the third contact surface (36) is produced by the reshaping of the radially inner clutch disc portion (22) relative to the radially outer clutch disc portion (20).

5. A method of manufacturing a clutch disc (14) for a speed change gear unit (10) according to any of the preceding claims, the clutch disc (14) being rotatable about a central axis (16), comprising the following steps:
(a) providing a substantially flat clutch disc blank (40) made of sheet metal having a substantially constant thickness; and
(b) reshaping a radially inner portion (42) of the clutch disc blank (40) in the direction of the central axis (16) and/or reshaping a radially outer portion (44) of the clutch disc blank (40) in the direction of the central axis (16) so that a radially inner clutch disc portion (22) and a radially outer clutch disc portion (20) are offset relative to each other along the central axis (16), wherein the radially inner portion (42) of the clutch disc blank (40) and the radially outer portion (44) of the clutch disc blank (40) are circumferentially closed and the radially inner portion (42) of the clutch disc blank (40) is cranked relative to the radially outer portion (44) of the clutch disc blank (40) and/or the radially outer portion (44) of the clutch disc blank (40) is cranked relative to the radially inner portion (42) of the clutch disc blank (40) by an offset (24) that fully surrounds the central axis (16) circumferentially, and wherein, during reshaping in the direction of the central axis (16), a first contact surface (28) is shaped on the radially inner clutch disc portion (22) for contact of the clutch disc (14) with a speed change gear (12).

6. The method according to claim 5, **characterized in that** the first contact surface (28) is shaped on a face side (26) projecting in the axial direction with respect to the radially outer clutch disc portion (20).

7. The method according to claim 5 or 6, **characterized in that**, during reshaping in the direction of the central axis (16),
a second contact surface (32) for applying a friction component of the synchronizing unit is shaped on the radially outer clutch disc portion (20), in particular wherein the second contact surface (32) is shaped on a face side (30) projecting in the axial direction with respect to the radially inner clutch disc portion (22), and/or
a third contact surface (36) for applying a sliding sleeve to the clutch disc (14) is shaped on the radially outer clutch disc portion (22), in particular wherein the third contact surface (36) is shaped on a face side (30) projecting in the axial direction with respect to the radially inner clutch disc portion (22).

8. The method according to any of claims 5 to 7, **characterized in that** the axial reshaping constitutes a fine machining step, in particular wherein the axial reshaping is the final mechanical machining step for manufacturing the clutch disc (14).

## Revendications

1. Unité de roue de changement de vitesse (10) pour une unité de synchronisation d'une boîte de vitesses, comprenant une roue de changement de vitesse (12) et un disque d'embrayage (14) fixé à la roue de changement de vitesse (12), la roue de changement de vitesse (12) et le disque d'embrayage (14) étant mobiles en rotation autour d'un axe médian commun (16), le disque d'embrayage (14) présentant un tronçon de disque d'embrayage radialement intérieur (22) et un tronçon de disque d'embrayage radialement extérieur (20), l'un des deux tronçons de disque d'embrayage (20, 22) étant façonné par rapport à l'autre tronçon de disque d'embrayage (20, 22) en direction de l'axe médian (16), **caractérisée en ce que** le tronçon de disque d'embrayage radialement intérieur (22) et le tronçon de disque d'embrayage radialement extérieur (22) présentent sensiblement la même épaisseur (Dᵢ, Dₐ) le long de l'axe médian (16), le tronçon de disque d'embrayage radialement intérieur (22) et le tronçon de disque d'embrayage radialement extérieur (20) entourant entièrement l'axe médian (16) dans le sens circonférentiel et étant reliées par un coude (24) entourant entièrement l'axe médian (16) dans le sens circonférentiel, et une première surface d'appui (28) étant prévue sur le tronçon de disque d'embrayage radialement intérieur (22) sur une face frontale (26) faisant saillie dans le sens axial par rapport au tronçon de disque d'embrayage radialement extérieur (20), et la première surface d'appui (28) étant en appui contre le roue de changement de vitesse (12).

2. Unité de roue de changement de vitesse selon la revendication 1, **caractérisée en ce que** la première surface d'appui (28) est produite par façonnage du tronçon de disque d'embrayage radialement intérieur (22) par rapport au tronçon de disque d'embrayage radialement extérieur (20).

3. Unité de roue de changement de vitesse (10) selon la revendication 1 ou 2, **caractérisée en ce qu'**une deuxième surface d'appui (32) est prévue sur le tronçon de disque d'embrayage radialement extérieur (20) sur une face frontale (30) faisant saillie dans le sens axial par rapport au tronçon de disque d'embrayage radialement intérieur (22) pour l'application d'un composant de friction ou d'un moyeu de synchronisation de l'unité de synchronisation, la deuxième surface d'appui (32) étant en particulier produite par le façonnage du tronçon de disque d'embrayage radialement intérieur (22) par rapport au tronçon de disque d'embrayage radialement extérieur (20).

4. Unité de roue de changement de vitesse (10) selon l'une des revendications précédentes, **caractérisée en ce qu'**une troisième surface d'appui (36) est prévue sur le tronçon de disque d'embrayage radialement extérieur (20) sur une face frontale (30) faisant saillie dans le sens axial par rapport au tronçon de disque d'embrayage radialement intérieur (22) pour l'application d'un manchon coulissant sur le disque d'embrayage (14), la troisième surface d'appui (36) étant en particulier produite par le façonnage du tronçon de disque d'embrayage radialement intérieur (22) par rapport au tronçon de disque d'embrayage radialement extérieur (20).

5. Procédé de fabrication d'un disque d'embrayage (14) pour une unité de roue de changement de vitesse (10) selon l'une des revendications précédentes, le disque d'embrayage (14) étant mobile en rotation autour d'un axe médian (16), comprenant les étapes suivantes :
a) fournissement d'une ébauche de disque d'embrayage (40) sensiblement plane en tôle d'épaisseur sensiblement constante, et
b) façonnage d'un tronçon radialement intérieur (42) de l'ébauche de disque d'embrayage (40) en direction de l'axe médian (16) et/ou façonnage d'un tronçon radialement extérieur (44) de l'ébauche de disque d'embrayage (40) en direction de l'axe médian (16) de sorte qu'un tronçon de disque d'embrayage radialement intérieur (22) et un tronçon de disque d'embrayage radialement extérieur (20) sont décalés l'un par rapport à l'autre le long de l'axe médian (16), le tronçon radialement intérieur (42) de l'ébauche de disque d'embrayage (40) et le tronçon radialement extérieur (44) de l'ébauche de disque d'embrayage (40) étant fermés dans le sens circonférentiel, et le tronçon radialement intérieur (42) de l'ébauche de disque d'embrayage (40) étant coudé par rapport au tronçon radialement extérieur (44) de l'ébauche de disque d'embrayage (40) et/ou le tronçon radialement extérieur (44) de l'ébauche de disque d'embrayage (40) étant coudé par rapport au tronçon radialement intérieur (42) de l'ébauche de disque d'embrayage (40) par un coude (24) entourant entièrement l'axe médian (16) dans le sens circonférentiel, et une première surface d'appui (28) étant formée sur le tronçon de disque d'embrayage radialement intérieur (22) en direction de l'axe médian (16) lors du façonnage pour l'appui du disque d'embrayage (14) contre une roue de changement de vitesse (12).

6. Procédé selon la revendication 5, **caractérisé en ce que** la première surface d'appui (28) est formée sur une face frontale (26) faisant saillie dans le sens axial par rapport au tronçon de disque d'embrayage radialement extérieur (20).

7. Procédé selon la revendication 5 ou 6, **caractérisé en ce que** lors du façonnage en direction de l'axe médian (16)
une deuxième surface d'appui (32) est formée sur le tronçon de disque d'embrayage radialement extérieur (20) pour l'application d'un composant de friction de l'unité de synchronisation, la deuxième surface d'appui (32) étant en particulier formée sur une face frontale (30) faisant saillie dans le sens axial par rapport au tronçon de disque d'embrayage radialement intérieur (22), et/ou
une troisième surface d'appui (36) est formée sur le tronçon de disque d'embrayage radialement extérieur (22) pour l'application d'un manchon coulissant sur le disque d'embrayage (14), la troisième surface d'appui (36) étant en particulier formée sur une face frontale (30) faisant saillie dans le sens axial par rapport au tronçon de disque d'embrayage radialement intérieur (22).

8. Procédé selon l'une des revendications 5 à 7, **caractérisé en ce que** le façonnage axial constitue une étape d'usinage de précision, le façonnage axial étant en particulier la dernière étape d'usinage mécanique pour la fabrication du disque d'embrayage (14).
